(19) Europäisches Patentamt
European Patent Office
Office européen des brevets

(11) **EP 2 611 850 B1**

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(21) Anmeldenummer: **11749164.7**

(22) Anmeldetag: **25.08.2011**

(51) Int Cl.:
*C08G 61/08* (2006.01)    *C09D 123/00* (2006.01)
*C08J 7/04* (2006.01)

(86) Internationale Anmeldenummer:
**PCT/EP2011/064614**

(87) Internationale Veröffentlichungsnummer:
**WO 2012/028530 (08.03.2012 Gazette 2012/10)**

(54) **BARRIEREBESCHICHTUNG AUS CYCLOOLEFINCOPOLYMEREN**

BARRIER COATING COMPOSED OF CYCLOOLEFIN COPOLYMERS

REVÊTEMENT BARRIÈRE EN COPOLYMÈRES DE CYCLO-OLÉFINES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2010 EP 10175186**

(43) Veröffentlichungstag der Anmeldung:
**10.07.2013 Patentblatt 2013/28**

(73) Patentinhaber: **BASF SE**
**67056 Ludwigshafen (DE)**

(72) Erfinder:
• **MÜLLER, Kevin**
**64646 Heppenheim (DE)**
• **PIETSCH, Ines**
**67346 Speyer (DE)**
• **SEYFFER, Hermann**
**69123 Heidelberg (DE)**
• **WEISS, Axel**
**67346 Speyer (DE)**
• **VAN DER NET, Antje**
**34128 Kassel (DE)**

(74) Vertreter: **Lindner, Anton et al**
**BASF Schweiz AG**
**IP Department**
**PO Box**
**4002 Basel (CH)**

(56) Entgegenhaltungen:
**EP-A1- 1 914 265**

EP 2 611 850 B1

**Beschreibung**

Die Erfindung betrifft Barrierebeschichtungen von Trägersubstraten und deren Herstellung, wobei auf einem Trägersubstrat eine Polymerschicht aufgebracht ist, welche gebildet ist aus einem Copolymer, welches herstellbar ist durch ringöffnende Metathesepolymerisation (ROM P) von (a) Olefinmonomeren, ausgewählt aus monocyclischen Olefinmonomeren mit einer oder zwei endocyclischen C-C-Doppelbindungen und bicyclischen Olefinmonomeren mit einer endocyclischen C-C-Doppelbindung und (b) polycyclischen Olefinmonomeren mit mindestens zwei C-C-Doppelbindungen.

Beim Verpacken oder Aufbewahren von empfindlichen Produkten ist es wichtig, dass die für die Verpackungen und Behälter verwendeten Materialien möglichst gute Barriereeigenschaften besitzen. Dadurch sollen entweder die verpackten Produkte gegen äußere Einflusse wie z.B. Gasen, insbesondere Sauerstoff oder Kohlendioxid, oder Luftfeuchtigkeit geschützt werden oder es soll verhindert werden, dass Bestandteile der verpackten Produkte nach außen gelangen, z.B. Aromastoffe, Feuchtigkeit oder fettige oder ölige Stoffe.

So ist es z.B. beim Verpacken von oxidationsempfindlichen oder sauerstoffempfindlichen Produkten wichtig, dass die verwendeten Verpackungsmaterialien Sauerstoffbarriereeigenschaften besitzen, d.h. dass sie eine möglichst geringe Transmission bzw. eine möglichst geringe Permeabilität für Sauerstoff aufweisen.

Da als Verpackungsmaterialien verwendete Polymerfolien, beispielsweise aus Polyolefinen wie Polyethylen oder orientiertem Polypropylen oder aus Polyestern wie z.B. aus Polyethylenterephtalat in der Regel in reiner, unbeschichteter Form eine relativ hohe Permeabilität für Sauerstoff zeigen, ist es erforderlich, die Sauerstoffbarriereeigenschaften der Verpackungsmaterialien z.B. durch Beschichten mit geeigneten, speziellen Polymeren zu erhöhen. Dabei werden bevorzugt Polymere mit einer hohen Hydrophilie wie beispielsweise Polyvinylalkohol oder Polyacrylsäuren verwendet. Diese Polymere zeigen eine sehr gute Sauerstoffbarriere unter trockenen Bedingungen, jedoch unter feuchten Bedingungen, d.h. bei Luftfeuchten von etwa 85% wird eine drastische Verschlechterung der Barriere beobachtet. Weiterhin gibt es Barrierebeschichtungen, die nicht ausreichend flexibel sind. Es kann dann beim Knicken oder Falten im Bereich von Faltstellen zu einer Beschädigung des Barrierefilms und dadurch bedingter ungenügender Barrierewirkungen kommen.

Beim Verpacken von öl- oder fetthaltigen Produkten ist es wichtig, dass die verwendeten Verpackungsmaterialien einen hohen Durchdringungswiderstand gegen Fette und Öle oder gute Fettbarriereeigenschaften aufweisen. Bekannt sind verschiedene Verfahren, welche geeignet sind, Verpackungsmaterialien, insbesondere auf Basis von Papier oder Karton, einen Durchdringungswiderstand gegen Fette und Öle zu verleihen. Hierzu können die Materialien beispielsweise mit Lösungen oder wässrigen Dispersionen von nativen oder synthetischen Polymeren, Paraffinen , Wachsen oder fluorierten Kohlenwasserstoffen imprägniert oder beschichtet werden. Dabei handelt es sich z.B. um Lösungen von Stärken und Stärkederivaten, Galaktomannanen, Carboxymethylcellulosen, Polyvinylalkoholen oder Lösungen von anderen synthetischen Polymeren beispielsweise anionischen Polyacrylamiden. Ein nach einem solchen Verfahren hergestelltes Papier verfügt nur über eine niedrige Fettdichte. Bekannt sind auch Verfahren, nach denen das Papier innerhalb oder außerhalb der Papiermaschine mit wässrigen Dispersionen von Polymeren, Paraffinen oder Wachsen imprägniert oder beschichtet wird. Bekannt sind weiterhin Verfahren, nach welchen mit Schmelzen von Polymeren, Hotmelts, Wachsen oder Paraffinen Papieren auf dem Weg der Extrusionsbeschichtung hohe Durchdringungswiderstände gegen Fette und Öle verliehen werden. Häufig sind Fettbarrierebeschichtungen mit Filmen auf Polymerbasis nicht ausreichend flexibel. Es kann dann beim Knicken oder Falten im Bereich von Falt-stellen, z.B. Kanten oder Ecken von Faltschachteln oder Kartons zu einer Beschädigung des Barrierefilms und dadurch bedingter ungenügender Fettbarrierewirkungen kommen.

Um Polymerfolien oder anderen, aus organischen Polymeren hergestellten Materialien die gewünschte Flexibilität zu verleihen, enthalten diese Materialien häufig sogenannte Weichmacher. Weichmacher sind bestimmte, flüssige oder feste, indifferente organische Substanzen mit geringem Dampfdruck, überwiegend solche esterartiger Natur, welche ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden können. Weichmacher verleihen den mit ihnen hergestellten Gebilden bzw. Überzügen bestimmte angestrebte physikalische Eigenschaften, wie z.B. erniedrigte Einfriertemperatur, erhöhtes Formveränderungsvermögen, erhöhte elastische Eigenschaften oder verringerte Härte. Sie gehören zu den Kunststoffadditiven. Sie werden in ein Material eingebracht, um dessen Bearbeitbarkeit, Flexibilität und Dehnungsvermögen zu verbessern wie z.B. in Weich-PVC. Bekannte, typische Weichmacher sind z.B. Phthalsäureester, Trimellitsäureester mit (überwiegend) linearen $C_6$- bis $C_{11}$-Alkoholen oder Dicarbonsäurediester. Eine besondere, bei der Anwendung von weichgemachten Kunststoffen auftretende, häufig unerwünschte Eigenschaft der Weichmacher ist ihre Fähigkeit zur Migration, die durch Diffusions-, Dampfdruck- und Konvektionsvorgänge zustande kommt, und die sich vor allem bei Berührung des Kunststoffs mit anderen flüssigen oder festen Stoffen bemerkbar macht. Der Weichmacher dringt dabei in den anderen Stoff (meist sind es andere polymere Kunststoffe) ein. Dieser wird angelöst, korrodiert oder es treten Quellerscheinungen und schließlich sogar ein Ankleben an der Oberfläche des Kontaktstoffes auf. Mit der Temperatur nimmt die Migrationsgeschwindigkeit rasch zu. Bei Klebeanwendungen kann eine Migration von Weichmachern in die Klebstoffschicht zu einer unerwünschten Herabsetzung der Haftkräfte, insbesondere bei höheren Temperaturen führen. Die Weichmacher-Migration spielt auch für die physiologische Unbedenklichkeit von Verpackungen eine Rolle. Es ist daher wünschenswert, der Weichmachermigration aus einem weichmacherhaltigen Material an dessen Oberfläche bzw. in angrenzende Schichten und Materialien durch eine Weichmacherbarriere entgegenzuwirken.

Ringöffnende Metathesepolymerisationen werden beschrieben in der EP 1847558 A1 oder in der US-Patentanmeldung 61/257063. Durch ringöffnende Metathesepolymerisation aus Cycloolefinen hergestellte Homopolymere aus Cycloocten oder aus Cyclopentadien sind häufig spröde, duroplastische oder nicht filmbildende Materialien, welche für die Bildung von flexiblen Beschichtungen ungeeignet sind oder sie haben schlechte Barriereeigenschaften oder die Glasübergangstemperatur ist nicht auf den gewünschten Wert einstellbar.

EP 1 914 265 A1 offenbart eine mehrlagige Struktur, die auch eine Barriereschicht umfaßt. Diese wird zum Beispiel aus olefinischen und thermoplastischen Polymeren sowie aus Polymeren, die über die Eigenschaft der Sauerstoffundurchlässigkeit verfügen (siehe Absatz [0069]). Beispiele der für die Barriereschicht verwendbaren Polymere werden in den Absätzen [0070] bis [0074] ausgeführt. D1 führt in der Beschreibung einer Sauerstoffabsorptionsschicht den Einsatz von Polydicyclopentadien (siehe Absatz [0027]) und Polycycloocten (siehe Absatz [0048]) aus.

Aufgabe der vorliegenden Erfindung war es, weitere Barrierebeschichtungen zur Verfügung zu stellen, welche die Herstellung von Verpackungen oder Behältern mit guten Barriereeigenschaften, z.B. Lebensmittelverpackungen ermöglicht. Die Barrierebeschichtungen sollten dabei möglichst gut temperaturresistent, flexibel und blockfest sein und möglichst keine gesundheitlich oder ökologisch bedenklichen Stoffe wie z.B. Fluorcarbonverbindungen enthalten. Außerdem sollten die Beschichtungen Barrierewirkungen möglichst gegen mehrere äußere Einflüsse besitzen, z.B. Aromabarriere, Wasserdampfbarriere, Gasbarriere (insbesondere Sauerstoffbarriere oder $CO_2$-Barriere), Fettbarriere und/oder Weichmacherbarriere.

Gegenstand der Erfindung ist eine Barrierebeschichtung, wobei auf einem Trägersubstrat, ausgewählt aus Polymerfolien, Papier und Pappe, mindestens eine Polymerschicht einer Dicke von mindestens 1 $\mu$m aufgebracht ist und die Polymerschicht gebildet ist aus mindestens einem Copolymer, welches herstellbar ist durch ringöffnende Metathesepolymerisation von

a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und

b) mindestens einem polycyclischen Olefinmonomer mit mindestens zwei C-C-Doppelbindungen;

und das molare Verhältnis von Olefinmonomeren a) zu polycyclischen Olefinmonomeren b) von 80:20 bis 15:85 beträgt.

Gegenstand der Erfindung ist auch ein Verfahren zur Erzeugung oder Verstärkung eine Barrierewirkung auf einem Trägersubstrat, ausgewählt aus Polymerfolien, Papier und Pappe, wobei mindestens eines der vorgenannten und unten näher beschriebenen Copolymere mit einer Schichtdicke von mindestens 1 $\mu$m auf das Trägersubstrat aufgebracht wird.

Gegenstand der Erfindung ist auch die Verwendung der vorgenannten und unten näher beschriebenen Copolymere um auf einem Trägersubstrat, ausgewählt aus Polymerfolien, Papier und Pappe, eine Barrierewirkung zu erzeugen oder zu verstärken.

Das mit dem Copolymer erfindungsgemäß beschichtete Trägersubstrat weist mindestens eine Barriereeigenschaft auf, z.B. Fettbarriere, Sauerstoffbarriere, Wasserdampfbarriere, Weichmacherbarriere, Aromabarriere, oder $CO_2$-Barriere, wobei die Barriereeigenschaft durch die erfindungsgemäße Beschichtung erzeugt oder verstärkt wird. Der Begriff Barriereeigenschaft bedeutet eine gegenüber unbeschichtetem Trägersubstrat verringerte Transmission bzw. Permeabilität gegenüber bestimmten Stoffen. Sauerstoffbarriereeigenschaften können z.B. mit dem in den Beispielen beschriebenem Permeabilitätstest gemessen werden. Vorzugsweise beträgt die Sauerstofftransmissionsrate für erfindungsgemäß beschichtete Polymerfolien weniger als 20%, insbesondere weniger als 10% oder weniger als 5%, z.B. zwischen 0,1% und 3% des Wertes der unbeschichteten Polymerfolie (gemessen bei 23°C und 85% relativer Luftfeuchtigkeit).

Fettbarriereeigenschaften können beispielsweise mit dem in den Beispielen beschriebenem Penetrationstest gemessen werden. Der Begriff "Fettbarriereeigenschaft" bedeutet eine gegenüber unbeschichtetem Substrat erhöhte Resistenz einer Substratoberfläche gegenüber dem Eindringen von Fetten, Ölen und fett- und ölartigen, hydrophoben Stoffen. Der Begriff "Weichmacherbarriere" bedeutet eine gegenüber unbeschichtetem Substrat erhöhte Resistenz einer Substratoberfläche gegenüber dem Eindringen von Weichmachern.

Die erfindungsgemäß eingesetzten Copolymere sind herstellbar durch ringöffnende Metathesepolymerisation. Unter einer Metathesereaktion wird ganz allgemein eine chemische Reaktion zwischen zwei Verbindungen verstanden, bei der eine Gruppe zwischen beiden Reaktionspartnern ausgetauscht wird. Handelt es sich dabei um eine organische Metathesereaktion, werden formal die Substituenten an einer Doppelbindung ausgetauscht. Von besonderer Bedeutung ist jedoch die metallkomplexkatalysierte ringöffnende Metathesereaktion von organischen Cycloolefinverbindungen ("ring opening metathesis polymerization" kurz ROM P), durch die polymere Polyolefine zugänglich werden. Als katalytische Metallkomplexe werden insbesondere Metallcarbenkomplexe der allgemeinen Struktur Met=CR$_2$ eingesetzt, wobei R einen organischen Rest bedeutet. Aufgrund der hohen Hydrolyseempfindlichkeit der Metallcarbenkomplexe können die Metathesereaktionen in wasserfreien organischen Lösungsmitteln oder den Olefinen selbst durchgeführt werden (siehe beispielsweise US-A 2008234451, EP-A 0824125). Zur Vermeidung von aufwändigen Reinigungsschritten zur Abtrennung von große Mengen an Lösungsmittel oder an nicht umgesetzten Olefinen kann die Metathesereaktion von Olefinen auch in wässrigem Medium durchgeführt werden (DE 19859191; US-Patentanmeldung 61/257063).

Die erfindungsgemäß eingesetzten Copolymere werden gebildet aus

a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und

b) mindestens einem polycyclischen Olefinmonomer mit mindestens zwei C-C-Doppelbindungen.

Das molare Verhältnis von Olefinmonomeren a) zu polycyclischen Olefinmonomeren b) beträgt von 80:20 bis 15:85, vorzugsweise von 65:35 bis 20:80.

Die Olefinmonomere a) weisen vorzugsweise eine Ringspannung von mindestens 2 kcal/mol. Die polycyclischen Olefinmonomere b) weisen vorzugsweise eine Ringspannung von mindestens 15 kcal/mol, bezogen auf den Ring mit der höchsten Spannung.

Olefinmonomere a) sind z.B. Cyclobuten, Cyclopenten, 2-Methylcyclopenten-1, 3-Methylcyclopenten-1, 4-Methylcyclopenten-1, 3-Butylcyclopenten-1, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, Cyclohepten, 1,2-Dimethylcyclohepten-1, cis-Cyclooeten, trans-Cyclooeten, 2-Methylcyclooeten-1, 3-Methylcyclooeten-1, 4-Methylcyclooeten-1, 5-Methylcyclooeten-1, Cyclononen, Cyclodecen, Cycloundecen, Cyclododecen, Cyclooctadien, Cyclopentadien, Cyclohexadien und Norbornen, wobei monocyclische Olefine mit einer C-C-Doppelbindung, insbesondere cis-Cyclooeten besonders bevorzugt sind.

Bevorzugte polycyclische Olefinmonomere b) sind bicyclische Diene, z.B. Norbomadien, Dicyclopentadien (3a,4,7,7a-Tetrahydro-1 H-4,7-methano-inden), Bicyclo[2.2.2]octa-2,5-dien, Bicyclo[3.3.0]octa-2,6-dien und Cyclopentadien-Oligomere, wie z.B. Tricyclopentadien. Besonders bevorzugt ist Dicyclopentadien.

In einer bevorzugten Ausführungsform ist das Copolymer gebildet durch ringöffnende Metathesepolymerisation von cis-Cycloocten und Dicyclopentadien.

Die Herstellung der erfindungsgemäß eingesetzten Copolymere erfolgt vorzugsweise in wässrigem Medium. Dabei kann die ringöffnende Metathesereaktion dergestalt erfolgen, dass Wasser und Dispergiermittel in einem Polymerisationsgefäß vorgelegt werden, ein als Katalysator eingesetzter organometallischer Carbenkomplex im Cycloolefin gelöst wird, die Cycloolefin/Metallkomplexlösung in die wässrige Dispergiermittellösung eingebracht wird, die dabei gebildete Cycloolefin/Metallkomplex-Makroemulsion in eine Cycloolefin/Metallkomplex-Miniemulsion überführt wird und diese bei Raumtemperatur zu einer wässrigen Polyolefin-Dispersion umgesetzt wird. Vorzugsweise erfolgt die ringöffnende Metathesereaktion dergestalt, dass wenigstens eine Teilmenge des Wassers, wenigstens eine Teilmenge Dispergiermittel, wenigstens eine Teilmenge der Monomeren in Form einer wässrigen Monomerenmakroemulsion mit einem mittleren Tröpfchendurchmesser $\geq 2\ \mu m$ vorgelegt werden, danach unter Energieeintrag die Monomerenmakroemulsion in eine Monomerenminiemulsion mit einem mittleren Tröpfchendurchmesser $\leq 1500$ nm überführt wird, und danach der erhaltenen Monomerenminiemulsion bei Polymerisationstemperatur die gegebenenfalls verbliebene Restmenge des Wassers, die gegebenenfalls verbliebene Restmenge des Dispergiermittels, die gegebenenfalls verbliebene Restmenge der Monomeren und die Gesamtmenge eines als Katalysator eingesetzten organometallischen Carbenkomplexes zugegeben werden.

Als Metathesekatalysatoren können organometallische Carbenkomplexe eingesetzt. Metalle sind z.B. Übergangsmetalle der 6., 7. oder 8. Nebengruppe, bevorzugt Molybdän, Wolfram, Osmium, Rhenium oder Ruthenium, wovon Osmium und Ruthenium bevorzugt sind. Besonders bevorzugt werden Ruthenium-Alkylidenkomplexe eingesetzt. Solche Metathesekatalysatoren sind aus dem Stand der Technik bekannt und werden z.B. in R.H. Grubbs (Ed.) "Handbook of Metathesis", 2003, Wiley-VCH, Weinheim, WO 93/20111, WO 96/04289, WO 97/03096, WO 97/06185, J. Am. Soc. 1996, S. 784-790 und in Coordination Chemistry Reviews, 2007, 251, S. 726-764 beschrieben.

Die Konzentration der Copolymeren in den zur Beschichtung eingesetzten Lösungen oder wässrigen Dispersionen beträgt vorzugsweise mindestens 1 Gew.-%, insbesondere mindestens 5 Gew.-% und bis zu 50 oder bis zu 60 Gew.%. Meistens liegt der Gehalt der Copolymeren in der wässrigen Dispersion bei 1 bis 50 Gew.% oder bei 10 bis 45 Gew.%, insbesondere bei 15 bis 40 Gew.-%.

Bevorzugte wässrige Dispersionen der Copolymere haben bei pH-Werten von 4 und einer Temperatur von 20°C eine Viskosität von 10 bis 150 000 mPas, oder 200 bis 5000 mPas (gemessen mit einem Brookfield-Viskosimeter bei 20°C, 20 UpM, Spindel 4). Die mittlere Teilchengröße der in der wässrigen Dispersion dispergierten Copolymerpartikel beträgt beispielsweise von 0,02 bis 100 $\mu$m, vorzugsweise 0,05 bis 10 $\mu$m. Sie kann z. B. mit Hilfe der optischen Mikroskopie, der Lichtstreuung oder der Gefrierbruchelektronenmikroskopie bestimmt werden.

Erfindungsgemäß werden die Trägersubstrate mit einer Lösung oder wässrigen Dispersion mindestens eines der oben beschriebenen Copolymere beschichtet. Geeignete Substrate sind insbesondere Papier, Karton und Polymerfolien. Die zur Beschichtung eingesetzten Lösungen oder Dispersionen können weitere Zusatz- oder Hilfsstoffe enthalten, z.B. Verdicker zur Einstellung der Rheologie, Benetzungshilfsmittel oder Bindemittel.

Die Anwendung kann beispielsweise auf Beschichtungsmaschinen in der Weise vorgenommen werden, dass man auf Papier, Karton oder auf eine Trägerfolie aus einem Kunststoff die Beschichtungszusammensetzung aufträgt. Sofern bahnförmige Materialien verwendet werden, wird die Polymerdispersion üblicherweise aus einer Wanne über eine Auftragswalze aufgetragen und mit Hilfe einer Luftbürste egalisiert.

Andere Möglichkeiten, die Beschichtung aufzubringen, gelingen z.B. mit Hilfe des Reverse Gravure-Verfahrens, mit Sprühverfahren oder mit einem Rollrakel oder mit anderen, dem Fachmann bekannten Beschichtungsverfahren. Das Trägersubstrat ist dabei auf mindestens einer Seite beschichtet, d.h. es kann einseitig oder beidseitig beschichtet sein.

Um die Haftung auf einer Folie noch zu verbessern, kann die Trägerfolie zuvor einer CoronaBehandlung unterworfen werden. Die auf die flächigen Materialien aufgetragenen Mengen betragen z.B. vorzugsweise 1 bis 10 g (Polymer, fest) pro m$^2$, vorzugsweise 2 bis 7 g/m$^2$ bei Folien, bzw. vorzugsweise 10 bis 30 g/m$^2$ bei Papier oder Karton. Nach dem Aufbringen der Beschichtungszusammensetzungen auf die Trägersubstrate wird das Lösungsmittel verdampft. Hierfür kann man beispielsweise bei kontinuierlichem Arbeiten das Material durch einen Trocknerkanal führen, der mit einer Infrarot-Bestrahlungsvorrichtung ausgestattet sein kann. Danach wird das beschichtete und getrocknete Material über eine Abkühlwalze geführt und schließlich aufgewickelt. Die Dicke der getrockneten Beschichtung beträgt mindestens 1 $\mu$m vorzugsweise 1 bis 50 $\mu$m, besonders bevorzugt 2 bis 30 $\mu$m.

Die erfindungsgemäß beschichteten Substrate zeigen eine hervorragende Barrierewirkung gegen Sauerstoff und Wasserdampf im Falle von Polymerfolien und eine hervorragende Barrierewirkung gegen Fette und Öle im Falle von Papier oder Pappe. Die beschichteten Substrate können als solche als Verpackungsmittel verwendet werden. Die Beschichtungen haben sehr gute mechanische Eigenschaften, und zeigen z.B. gutes Blockverhalten und zeigen im Wesentlichen keine Rissbildungen.

Um spezielle Oberflächen- oder Beschichtungseigenschaften der Folien und Verpackungsmittel zu erhalten, beispielsweise eine gute Bedruckbarkeit, noch besseres Siegel- Barriere- oder Blockverhalten, gute Wasserbeständigkeit, kann es vorteilhaft sein, die beschichteten Substrate mit Deckschichten zu überschichten, die diese gewünschten Eigenschaften zusätzlich verleihen oder die Barrierebeschichtung einer Coronabehandlung zu unterwerfen. Die erfindungsgemäß vorbeschichteten Substrate zeigen eine gute Überbeschichtbarkeit. Es kann erneut nach einem oben angeführten Verfahren überbeschichtet oder in einem kontinuierlichen Prozess ohne zwischenzeitliches Auf- und Abwickeln z.B. der Folie oder des Papiers gleichzeitig mehrfach beschichtet werden, z.B. unter Verwendung eines Vorhangbeschichters. Die erfindungsgemäße Barriereschicht befindet sich dadurch im Inneren des Systems, die Oberflächeneigenschaften werden dann von der Deckschicht bestimmt. Die Deckschicht hat eine gute Haftung zur Barriereschicht.

Nach dem beschriebenen Verfahren lassen sich in einfacher Weise Barrierebeschichtungen, z.B. auf Folien aus orientiertem Polypropylen oder Polyethylen, herstellen, wobei das Polyethylen sowohl nach dem Hochdruck- als auch nach dem Niederdruckpolymerisationsverfahren von Ethylen hergestellt worden sein kann.

Andere geeignete Trägerfolien sind beispielsweise Folien aus Polyester, wie Polyethylenterephthalat, Folien aus Polyamid, Polystyrol und Polyvinylchlorid. In einer Ausführungsform handelt es sich bei dem Trägermaterial um biologisch abbaubare Folien, z.B. aus biologisch abbaubaren aliphatisch-aromatischen Copolyestern und/oder Polymilchsäure, beispielsweise E-coflex® - oder Ecovio®-Folien. Geeignete Copolyester sind z.B. gebildet aus Alkandiolen, insbesondere C2- bis C8-Alkandiolen wie z.B. 1,4-Butandiol, aus aliphatischen Dicarbonsäuren, insbesondere C2- bis C8-Dicarbonsäuren wie z.B. Adipinsäure und aus aromatischen Dicarbonsäuren wie z.B. Terephthalsäure. Als Trägermaterialien eignen sich außerdem Papiere und Pappe. Besonders bevorzugt sind Trägermaterialien aus Papier oder Pappe insbesondere für eine Herstellung von beschichteten Faltschachteln.

Die Dicke der Trägerfolien liegt im allgemeinen in dem Bereich von 10 bis 200 $\mu$m, bei Folien aus Polyamid vorzugsweise bei 30 bis 50 $\mu$m, bei Folien aus Polyethylenterephthalat vorzugsweise bei 10 bis 40 $\mu$m, bei Folien aus Polyvinylchlorid (insbesondere aus Weich-PVC) vorzugsweise bei ca. 10 bis 100 $\mu$m und bei Folien aus Polystyrol vorzugsweise bei etwa 30-75 $\mu$m.

In einer Ausführungsform der Erfindung werden die erfindungsgemäßen Copolymere verwendet, um Trägermaterialien eine Weichmacherbarriere zu verleihen. Zur Verwendung als Weichmacherbarriere werden die erfindungsgemäß einzusetzenden Copolymere auf die Oberfläche eines mindestens einen Weichmacher enthaltenden Substrats aufgetragen. Weichmacher sind bestimmte, flüssige oder feste, indifferente organische Substanzen mit geringem Dampfdruck, überwiegend solche esterartiger Natur, welche ohne chemische Reaktion, vorzugsweise durch ihr Löse- und Quellvermögen, mit hochpolymeren Stoffen in physikalische Wechselwirkung treten und ein homogenes System mit diesen bilden können. Weichmacher verleihen den mit ihnen hergestellten Gebilden bzw. Überzügen bestimmte angestrebte physikalische Eigenschaften, wie z.B. erniedrigte Einfriertemperatur, erhöhtes Formveränderungsvermögen, erhöhte elastische Eigenschaften oder verringerte Härte. Sie gehören zu den Kunststoffadditiven. Sie werden in ein Material eingebracht, um dessen Bearbeitbarkeit, Flexibilität und Dehnungsvermögen zu verbessern wie z.B. in Weich-PVC.

Bevorzugte Weichmacher sind z.B. Phthalsäureester (z.B. Dioctylphthalat, Diisononylphthalat, Diisodecylphthalat; Dibutylphthalat, Diisobutylphthalat, Dicyclohexylphthalat; Dimethylphthalat, Diethylphthalat, Mischester aus Benzylbutyl-, Butyloctyl-, Butyldecyl- und Dipentylphthalat, Bis(2-methoxyethyl)-phthalat, Dicaprylphthalat und dergleichen); Trimellitsäureester mit (überwiegend) linearen $C_6$- bis $C_{11}$-Alkoholen (z.B. Tris(2-ethylhexyl)trimellitat); acyclische, aliphatische Dicarbonsäureester (z.B. Dioctyladipat, Diisodecyladipat, Dibutylsebacat, Dioctylsebacat, Decandisäurester oder Azelate); alicyclische Dicarbonsäureester (z.B. Diisononylcyclohexandicarbonsäureester), Phosphorsäureester (z.B. Trikresylphosphat, Triphenylphosphat, Diphenylkresylphosphat, Diphenyloctylphosphat, Tris(2-ethylhexyl)-phosphat, Tris(2-butoxyethyl)-phosphat); Citronensäureester, Milchsäureester, Epoxyweichmacher, Benzolsulfonamide, Methylbenzolsulfonamide und ähnliche. Besonders bevorzugte Weichmacher sind Diisononylcyclohexandicarboxylat, Dibutylphthalat, Diisononylphthalat und Dinonylundecylphthalat.

Vorzugsweise handelt es sich bei den weichmacherhaltigen Substraten um Materialien aus Polyvinylchlorid (PVC, Weich-PVC), d.h. ein Trägersubstrat aus Weichmacher enthaltendem Weich-PVC wird mit einer ein erfindungsgemäßes Copolymer enthaltenden Barriereschicht versehen. Hierbei wird die Oberfläche des Substrats zumindest teilweise mit mindestens einer Schicht, welche mindestens ein erfindungsgemäßes Copolymer aufweist, beschichtet. In einer bevorzugten Ausführungsform handelt es sich bei dem Substrat um eine weichmacherhaltige PVC-Folie. Die PVC-Folie ist ein- oder beidseitig, vorzugsweise einseitig mit mindestens einem erfindungsgemäßen Copolymer beschichtet.

In einer Ausführungsform der Erfindung ist die das erfindungsgemäße Copolymer enthaltende Barriereschicht zusätzlich ganz oder zumindest teilweise, unmittelbar oder mittelbar mit einer Klebstoffschicht beschichtet. Der Klebstoff ist vorzugsweise ausgewählt aus heiß siegelbaren Klebstoffen, kaltsiegelbaren Klebstoffen, Haftklebstoffen, Schmelzklebstoffen, strahlungsvernetzbaren Klebstoffen und wärmevernetzbaren Klebstoffen. Gegenstand der Erfindung ist z.B. eine heiß siegelbare Weich-PVC-Folie, welche eine äußere, heiß siegelbare Schicht aufweist und sich zwischen dem Trägermaterial aus Weich-PVC und der heiß siegelbaren Schicht eine mindestens eines der oben beschriebenen Copolymere enthaltende Barriereschicht befindet. Gegenstand der Erfindung ist z.B. auch ein selbstklebendes Weich-PVC-Klebeband, wobei sich zwischen Trägermaterial aus Weich-PVC und äußerer Haftklebstoffschicht eine mindestens eines der oben beschriebenen Copolymere enthaltende Barriereschicht befindet.

Die erfindungsgemäß beschichteten weichmacherhaltigen Substrate zeigen eine hervorragende Barrierewirkung gegen die Migration von Weichmachern. Die beschichteten Substrate können als solche z.B. als graphische Gestaltungselemente (graphic art), zur Kaschierung von Möbeln oder von Formteilen im Automobilbau wie z.B. Innentürverkleidungen, als Verpackungsmittel oder als Klebebänder verwendet werden. Die Beschichtungen haben sehr gute mechanische Eigenschaften, und zeigen z.B. gutes Blockverhalten und zeigen im Wesentlichen keine Rissbildungen.

Beispiele

Es wurden folgende Copolymerdispersionen eingesetzt (Monomerverhältnisse beziehen sich auf molare Verhältnisse):

Dispersion D1:

30%ige wässrige Poly(dicyclopentadien-co-octenamer)-Dispersion, hergestellt durch ringöffnende Metathesepolymerisation (ROMP) aus Dicyclopentadien und cis-Cycloocten (50:50) unter Verwendung eines Rutheniumalkylidenkatalysators. Zahlenmittlere Teilchengröße: 270 nm

Dispersion D2:

30%ige wässrige Poly(dicyclopentadien-co-octenamer)-Dispersion, hergestellt durch ringöffnende Metathesepolymerisation (ROMP) aus Dicyclopentadien und cis-Cycloocten (60:40) unter Verwendung eines Rutheniumalkylidenkatalysators.

Dispersion D3:

30%ige wässrige Poly(dicyclopentadien-co-octenamer)-Dispersion, hergestellt durch ringöffnende Metathesepolymerisation (ROMP) aus Dicyclopentadien und cis-Cycloocten (70:30) unter Verwendung eines Ruthenium-alkylidenkatalysators.

Vergleichsdispersion D4:

30%ige wässrige Polyoctenamer-Dispersion, hergestellt durch ringöffnende Metathesepolymerisation (ROMP) aus cis-Cyclooocten unter Verwendung eines Rutheniumalkylidenkatalysators.

Vergleichsdispersion D5:

Acronal® S 504; 50%ige wässrige Dispersion eins n-Butylacrylat/Acrylnitril/Styrol Copolymers

Bestimmung der Sauerstoffpermeabilität einer Polyalkenamerfolie:

Die Herstellung der Folie erfolgte durch Ausgießen einer Polyalkenamerdispersion in eine Silikonform mit den Maßen 15 cm x 10 cm x 0,5 cm (Länge x Breite x Höhe). Der ausgegossene Dispersionsfilm wurde für 48h bei 25°C getrocknet und anschließend für 10 Minuten bei einer Temperatur von 65°C getempert.

Die trockenen und feuchten Sauerstoffpermeabilitäten wurden mit einem MOCON OXTRAN® 2/21 gemessen, dessen Messprinzip auf der Trägergasmethode beruht (ASTM D-3985). Bei der Trägergasmethode werden die maskierten Probenfilme (ohne Trägermaterial) mit einer Fläche, in diesem Fall von 5 $cm^2$, in einer luftdichten Zelle mit beidseitigem Hohlraum eingebaut. Auf der einen Seite der Probe wird ein Trägergas (95% $N_2$ und 5% $H_2$) und auf der anderen Seite das Messgas (100% $O_2$) drucklos vorbeigeleitet. Das durch die Probe diffundierende Messgas wird von dem Trägergas aufgenommen und zu einem coulometrischen Sensor geleitet. Somit kann die Sauerstoffkonzentration als Funktion der Zeit ermittelt werden. Alle Messungen wurden bei 23° Celsius und einer definierten relativen Luftfeuchte (RH) durchgeführt. Beide Seiten der Probe wurden der definierten Luftfeuchte ausgesetzt. Die Konditionierung des Gerätes und der Probe dauerte ca. eine halbe Stunde. Die Maschinenlaufzeit betrug für die Messungen 1 bis 4 Tage. Von jeder Probe wurde eine Doppelbestimmung durchgeführt. Für das Messverfahren wurde die Transmissionsrate ($cm^3$/($m^2$*Tag)) der Probe mit der mittleren Dicke der Folie, welche an 5 verschiedenen Stellen bestimmt wurde, auf 1 $\mu$m und 1 bar normalisiert. Durch diese Normalisierung ergab sich die Permeationsrate [$cm^3\mu$m/($m^2$*Tag*bar)].

In einer ersten Messung wurde die Sauerstoffpermeabilität unter trockenen Bedingungen bestimmt. In einer zweiten Messung wurde die Sauerstoffpermeabilität unter feuchten Bedingungen (85% relative Luftfeuchte) bestimmt. Die Ergebnisse sind in Tabelle 1 aufgeführt. Die Foliendicke betrug 386,8 $\mu$m.

Tabelle 1: Sauerstoffpermeabilität einer Polyalkenamerfolie

| Probe | Transmissionsrate 23°C, trocken [[$cm^3$/($m^2$*Tag)] | Permeationsrate 23°C, trocken [$cm^3\mu$m/($m^2$*Tag*bar)] | Transmissionsrate 23°C, 85% RH [$cm^3$/($m^2$*Tag)] | Permeationsrate 23°C, 85% RH [$cm^3\mu$m/($m^2$*Tag*bar)] |
|---|---|---|---|---|
| D1 | 0,272 | 104,8 | 0,254 | 98,247 |

Bestimmung der Wasserdampfpermeabilität einer Polyalkenamerfolie:

Die Herstellung der Folie erfolgte wie oben beschrieben. Die Messung der Wasserdampfpermeabilitäten erfolgte bei 85% relativer Luftfeuchte mit einem MOCON PERMATRAN-W® 3/33, dessen Messprinzip ebenfalls auf der Trägergas-Methode beruht. Das Gerät arbeitet nach der ASTM F-1249. Bei der Trägergasmethode werden die maskierten Probenfilme (ohne Trägermaterial) mit einer Fläche, in diesem Fall von 5 $cm^2$, in einer luftdichten Zelle mit beidseitigem Hohlraum eingebaut. Auf der einen Seite der Probe wird ein Trägergas (trockenes $N_2$) und auf der anderen Seite das Messgas ($N_2$ + Wasserdampf) drucklos vorbeigeleitet. Das durch die Probe diffundierende Messgas wird von dem Trägergas aufgenommen und zu einem selektiven Sensor geleitet. Bei Wasserdampfmessgeräten wird ein IR-Sensor eingesetzt. Somit kann die Wasserdampfkonzentration als Funktion der Zeit ermittelt werden. Die Messungen wurden bei 23° Celsius durchgeführt. Die Konditionierung des Gerätes dauerte ca. 30 Minuten. Die Maschinenlaufzeit betrug für alle Messungen 1 bis 4 Tage. Die Transmissionsrate der Probe wurde bei einer möglichst genauen Einstellung der relativen Luftfeuchte von 85% gemessen, der kleine messtechnische Fehler bei der Einstellung der Feuchte wurde anschließend rechnerisch korrigiert. Hierbei wurde angenommen, dass die Transmissionsrate linear mit der relativen Luftfeuchte im Messbereich korreliert. Für das Messverfahren wurde die Transmissionsrate (g/($m^2$*Tag)) der Probe mit der mittleren Dicke der Folie, welche an 5 verschiedenen Stellen bestimmt wurde, normalisiert. Durch diese Normalisierung ergab sich die Permeationsrate (g*$\mu$m/($m^2$*Tag)). Die Ergebnisse sind in Tabelle 2 aufgeführt. Die Foliendicke betrug 320 $\mu$m.

Tabelle 2: Wasserdampfpermeabilität einer Polyalkenamerfolie

| Probe | Transmissionsrate 23°C, 85% RH [g/(m$^2$*Tag)] | Permeationsrate 23°C, 85% RH [g*$\mu$m/(m$^2$*Tag)] |
|---|---|---|
| D1 | 3,76 | 1203 |

Bestimmung der Wasserdampfdurchlässigkeit von barrierebeschichtetem Papier:

Die Viskositäten der Polyalkenamerdispersionen D1 bis D4 wurden durch Zugabe von 2% STEROCOLL® BL auf einen Bereich zwischen 1000 und 1500 mPas eingestellt. Mittels einer Papierstreichmaschine wurden einseitig vorgestrichene Rohpapiere (Typ Magnostar, Flächengewicht 70 g/m$^2$) mit den Dispersionen beschichtet und anschließend für 1 Minute bei 110°C getrocknet. Zur Kontrolle der Auftragsmenge wurden aus dem Rohpapier und aus dem gestrichenen Papier je zwei 5cm x 5cm große Proben ausgestanzt, beide wurden gewogen und die flächenbezogene Auftragsmasse wurde bestimmt.

Aus dem zu prüfenden Material wurden runde Muster mit einem Durchmesser von 90 mm ausgestanzt. Die Prüflinge wurden auf ein Metallschälchen, welches mit getrocknetem Silikagel gefüllt war, aufgelegt, so dass die beschichtete Seite nach außen zeigte (dem Testmedium zugewandt). Die Seitenränder wurden mit einer geschmolzenen Wachsmischung verschlossen. Der Wachsrand wurde mit einem kleinen Gasbrenner nochmals aufgeschmolzen und dadurch homogenisiert. Anschließend wurde der Rand der Schälchen mit einem Messer bzw. mit Petrolether und Putzwolle von Wachsresten befreit. Die Schälchen wurden gewogen (Startwert) und anschließend bei 23 °C und 85 % relativer Luftfeuchte gelagert. Nach 24 h wurden die Schälchen erneut gewogen und die Gewichtszunahme bestimmt. Dieses Prozedere wurde fortgesetzt, bis die Gewichtszunahme konstant war. Die Proben wurden nach der Entnahme aus dem Klimaschrank 15 min bei 23 °C und 50 % relativer Luftfeuchte in einem Klimaraum konditioniert, bevor sie gewogen wurden. Die Wasserdampfdurchlässigkeiten (WDD in g/(m$^2$*Tag)) der Proben wurden gemäß folgender Formel berechnet und sind in Tabelle 3 angegeben:

$$WDD = 10^4 * dm / A$$

wobei

dm = Massendifferenz der letzten konstanten Wägungen in Gramm
A = Prüffläche der Probe in cm$^2$

Tabelle 3: Wasserdampfdurchlässigkeit von Papier

| Probe | Auftragsmasse [g/m$^2$] | Wasserdampfdurchlässigkeit [g/(m$^2$*Tag)] |
|---|---|---|
| D1 | 14,0 | 45,1 |
| D2 | 14,7 | 54,0 |
| D3 | 12,7 | 55,8 |
| D4 (Vergleich) | 13,0 | 78,5 |
| D5 (Vergleich) | 14,1 | 342,2 |

Bestimmung der Ölpenetration von barrierebeschichtetem Papier:

Als Testsubstanz wurde eine Mischung aus Ölsäure und 0,5% Sudanblau verwendet. Die Testsubstanz wurde auf die beschichteten Papiere der Größe von 10x10cm aufgetragen. Diese wurden anschließend bei einer Temperatur von 60°C gelagert. Nach den in der nachfolgenden Tabelle angegebenen Zeiträumen wurde der prozentuale Anteil an blau gefärbten Fettstellen auf der der Testsubstanz abgewandten Papieroberfläche bestimmt. Die in Tabelle 4 angegebenen Werte entsprechen dem ungefähren Prozentsatz an blau eingefärbter Oberfläche und sind ein Maß für die Penetration der Testsubstanz durch das beschichtete Papier.

Tabelle 4: Ölpenetration von barrierebeschichtetem Papier

| Probe | Auftragsmasse [g/m$^2$] | Ölpenetration nach 1 Stunde [%] | Ölpenetration nach 16 Stunden [%] |
|---|---|---|---|
| D1 | 14,0 | 0 | 4 |
| D2 | 14,7 | 0 | 1 |
| D3 | 12,7 | 0 | 25 |
| D4 (Vergleich) | 13,0 | 0 | 79 |
| D5 (Vergleich) | 14,1 | 0 | 90 |

Messung der Sauerstoffbarrierewirkung:

Die Sauerstoffbarrierewirkung wurde gemessen durch Bestimmung der Sauerstofftransmission bzw. der Sauerstoffpermeabilität einer mit Poly(dicyclopentadien-co-octenamer) beschichteten biaxial orientierten Polypropylenfolie (boPP-Folie) bei der jeweils angegebenen relativen Feuchte. Dabei wird die Sauerstoffdurchlässigkeit (Transmission) gemessen. Die Bestimmung erfolgt gemäß ASTM-D 3985 mit einem coulometrischen Sensor.

Eine Polymerfolie aus biaxial orientierten Polypropylen (boPP-Folie) mit einer Dicke von 40 $\mu$m wurde mit Poly(dicyclopentadien-co-octenamer) der Dispersion D1 mit einer Dicke von 16 $\mu$m beschichtet und 7 Tage gelagert. Gemessen wurde bei 23 °C mit synthetischer Luft (21 % Sauerstoff), die Ergebnisse werden auf 100% Sauerstoff hochgerechnet. Von jeder Probe wurde eine Doppelbestimmung durchgeführt. Die Sauerstoffbarrierewirkung wurde bei 0 % und 85% relativer Luftfeuchte gemessen.

Die unbeschichtete boPP-Folie (40$\mu$m) weist folgende Sauerstofftransmissionsraten auf:

0% RH: ca. 940 cm$^3$/(m$^2$*d)
85% RH: ca. 975 cm$^3$/(m$^2$*d)

Die Transmission für einzelne Schichten (A, B, ...) eines mehrschichtigen Systems ergibt sich aus:

$$\frac{1}{TR_{total}} = \frac{1}{TR_A} + \frac{1}{TR_B} + \Lambda$$

Probe 1:

boPP-Folie (40$\mu$m), beschichtet mit 16 $\mu$m Poly(dicyclopentadien-co-octenamer) der Dispersion 1 (molares Monomerverhältnis 1:1, Feststoffgehalt 30%, Teilchengröße 270nm).

Probe 2:

boPP-Folie (40$\mu$m), beschichtet mit 16 $\mu$m Poly(dicyclopentadien-co-octenamer) der Dispersion 1 und anschließend Corona-behandelt (ca. 2 sec mit 0,5 kW).

Die Ergebnisse sind in Tabelle 5 zusammengefasst.

Tabelle 5: Sauerstoffbarrierewirkung einer beschichteten boPP-Folie

| Probe | Transmissionsrate der Beschichtung [cm$^3$/(m$^2$*Tag)] |
|---|---|
| Probe 1 | 11,3 (0% RH) 148,9 (85% RH) |
| Probe 2 | 6,0 (0% RH) |

**Patentansprüche**

1.  Barrierebeschichtung, wobei auf einem Trägersubstrat, ausgewählt aus Polymerfolien, Papier und Pappe, mindestens eine Polymerschicht einer Dicke von mindestens 1 $\mu$m aufgebracht ist und die Polymerschicht gebildet ist aus mindestens einem Copolymer, welches herstellbar ist durch ringöffnende Metathesepolymerisation von

> a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und
> b) mindestens einem polycyclischen Olefinmonomer mit mindestens zwei C-C-Doppelbindungen;

und das molare Verhältnis von Olefinmonomeren a) zu polycyclischen Olefinmonomeren b) von 80:20 bis 15:85 beträgt.

2.  Barrierebeschichtung nach dem vorhergehenden Anspruch, **dadurch gekennzeichnet, dass** die Olefinmonomere a) eine Ringspannung von mindestens 2 kcal/mol aufweisen und dass die polycyclischen Olefinmonomere b) ausgewählt sind aus bicyclischen Dienen mit einer Ringspannung von mindestens 15 kcal/mol.

3.  Barrierebeschichtung nach einem der vorhergehenden Ansprüche, **dadurch gekennzeichnet, dass** das Copolymer herstellbar ist durch ringöffnende Metathesepolymerisation von cis-Cycloocten und Dicyclopentadien.

4.  Barrierebeschichtung nach einem der vorhergehenden Ansprüche, **dadurch gekennzeichnet, dass** das Trägersubstrat eine Polymerfolie ist, welche hergestellt ist aus Polyethylenterephtalat, orientiertem Polypropylen, Polyethylen oder biologisch abbaubaren aliphatisch-aromatischen Copolyestern.

5.  Barrierebeschichtung nach einem der vorhergehenden Ansprüche, **dadurch gekennzeichnet, dass** das Trägersubstrat eine Verpackung oder ein Teil einer Verpackung ist.

6.  Barrierebeschichtung nach einem der vorhergehenden Ansprüche, **dadurch gekennzeichnet, dass** das Trägersubstrat weichmacherhaltig ist.

7.  Barrierebeschichtung nach dem vorhergehenden Anspruch, **dadurch gekennzeichnet, dass** es sich bei dem Trägersubstrat um eine weichmacherhaltige PVC-Folie handelt.

8.  Barrierebeschichtung nach einem der vorhergehenden Ansprüche, **dadurch gekennzeichnet, dass** die Barrierebeschichtung zusätzlich unmittelbar oder mittelbar mit einer Klebstoffschicht beschichtet ist.

9.  Verfahren zur Erzeugung oder Verstärkung eine Barrierewirkung auf einem Trägersubstrat, ausgewählt aus Polymerfolien, Papier und Pappe, wobei mindestens ein Copolymer mit einer Schichtdicke von mindestens 1 $\mu$m auf das Trägersubstrat aufgebracht wird und das Copolymer herstellbar ist durch ringöffnende Metathesepolymerisation von

> a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und
> b) mindestens einem polycyclischen Olefinmonomer mit mindestens zwei C-C-Doppelbindungen;

und das molare Verhältnis von Olefinmonomeren a) zu polycyclischen Olefinmonomeren b) von 80:20 bis 15:85 beträgt.

10. Verfahren nach dem vorhergehenden Anspruch, **dadurch gekennzeichnet, dass** das Copolymer in Form einer wässrigen Dispersion des Copolymers aufgebracht wird und durch Trocknen der Dispersion auf dem Trägersubstrat ein Film gebildet wird.

11. Verfahren nach einem der beiden vorhergehenden Ansprüche, **dadurch gekennzeichnet, dass** das Trägersubstrat eine Folie oder eine Verpackung ist und mindestens ein Teil der Oberfläche der Verpackung oder der Folie mit einem Film des Copolymers beschichtet ist.

12. Verwendung eines Copolymers um auf einem Trägersubstrat, ausgewählt aus Polymerfolien, Papier und Pappe, eine Barrierewirkung zu erzeugen oder zu verstärken, wobei das Copolymer herstellbar ist durch ringöffnende Metathesepolymerisation von

a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und
b) mindestens einem polycyclischen Olefinmonomer mit mindestens zwei C-C-Doppelbindungen;

und das molare Verhältnis von Olefinmonomeren a) zu polycyclischen Olefinmonomeren b) von 80:20 bis 15:85 beträgt.

**13.** Verwendung nach dem vorhergehenden Anspruch, **dadurch gekennzeichnet, dass** das Copolymer in Form einer wässrigen Dispersion des Copolymers zur Herstellung eines Barrierefilms verwendet wird.

**14.** Verwendung nach einem der beiden vorhergehenden Ansprüche, **dadurch gekennzeichnet, dass** es sich bei der Barrierewirkung um eine Fettbarriere, Sauerstoffbarriere, Wasserdampfbarriere, Weichmacherbarriere, Aromabarriere, oder $CO_2$-Barriere handelt.

**15.** Verwendung nach einem der vorhergehenden Verwendungsansprüche, **dadurch gekennzeichnet, dass** Polymerfolien eine Sauerstoffbarriere oder eine Wasserdampfbarriere verliehen wird oder Papier eine Fettbarriere verliehen wird.

**Claims**

**1.** A barrier coating where at least one polymer layer of thickness at least 1 $\mu$m has been applied on a supportive substrate selected from polymer foils, paper, and paperboard, and the polymer layer has been formed from at least one copolymer, where this can be produced via ring-opening metathesis polymerization of

a) at least one olefin monomer, selected from the group consisting of monocyclic olefin monomers having one or two endocyclic C-C double bonds and bicyclic olefin monomers having an endocyclic C-C double bond, and
b) at least one polycyclic olefin monomer having at least two C-C double bonds;

and the molar ratio of olefin monomers a) to polycyclic olefin monomers b) is from 80:20 to 15:85.

**2.** The barrier coating according to the preceding claim, wherein the ring strain of the olefin monomers a) is at least 2 kcal/mol, and the polycyclic olefin monomers b) have been selected from bicyclic dienes whose ring strain is at least 15 kcal/mol.

**3.** The barrier coating according to either of the preceding claims, wherein the copolymer can be produced via ring-opening metathesis polymerization of cis-cyclooctene and dicyclopentadiene.

**4.** The barrier coating according to any of the preceding claims, wherein the supportive substrate is a polymer foil which has been produced from polyethylene terephthalate, from oriented polypropylene, from polyethylene, or from biodegradable aliphatic-aromatic copolyesters.

**5.** The barrier coating according to any of the preceding claims, wherein the supportive substrate is packaging or a portion of packaging.

**6.** The barrier coating according to any of the preceding claims, wherein the supportive substrate comprises plasticizer.

**7.** The barrier coating according to the preceding claim, wherein the supportive substrate is a PVC foil comprising plasticizer.

**8.** The barrier coating according to any of the preceding claims, wherein the barrier coating has also been coated with an adhesive layer, either directly or not directly.

**9.** A process for producing or increasing a barrier effect on a supportive substrate, selected from polymer foils, paper, and paperboard, where at least one copolymer layer of thickness of at least 1 $\mu$m is applied to the supportive substrate, and the copolymer can be produced via ring-opening metathesis polymerization of

a) at least one olefin monomer, selected from the group consisting of monocyclic olefin monomers having one or two endocyclic C-C double bonds and bicyclic olefin monomers having an endocyclic C-C double bond, and
b) at least one polycyclic olefin monomer having at least two C-C double bonds;

and the molar ratio of olefin monomers a) to polycyclic olefin monomers b) is from 80:20 to 15:85.

10. The process according to the preceding claim, wherein the copolymer is applied in the form of an aqueous dispersion of the copolymer, and a film is formed via drying of the dispersion on the supportive substrate.

11. The process according to either of the two preceding claims, wherein the supportive substrate is a foil or packaging, and at least one portion of the surface of the packaging or of the foil has been coated with a film of the copolymer.

12. The use of a copolymer for producing or increasing a barrier effect on a supportive substrate, selected from polymer foils, paper, and paperboard, where the copolymer can be produced via ring- opening metathesis polymerization of

a) at least one olefin monomer, selected from the group consisting of monocyclic olefin monomers having one or two endocyclic C-C double bonds and bicyclic olefin monomers having an endocyclic C-C double bond, and
b) at least one polycyclic olefin monomer having at least two C-C double bonds;

and the molar ratio of olefin monomers a) to polycyclic olefin monomers b) is from 80:20 to 15:85.

13. The use according to the preceding claim, wherein the copolymer is used in the form of an aqueous dispersion of the copolymer for producing a barrier film.

14. The use according to either of the two preceding claims, wherein the barrier effect involves a fat barrier, an oxygen barrier, a water-vapor barrier, a plasticizer barrier, a flavor barrier, or a $CO_2$ barrier.

15. The use according to any of the preceding use claims, wherein an oxygen barrier or a water-vapor barrier is provided to polymer foils, or a fat barrier is provided to paper.

**Revendications**

1. Revêtement formant une barrière, au moins une couche de polymère d'une épaisseur d'au moins 1 $\mu$m étant appliquée sur un substrat support, choisi parmi les feuilles de polymère, le papier et le carton-pâte et la couche de polymère étant formée à partir d'au moins un copolymère qui peut être préparé par polymérisation par métathèse à ouverture de cycle de

a) au moins un monomère oléfinique, choisi dans le groupe constitué par les monomères oléfiniques monocycliques présentant une ou deux doubles liaisons C-C endocycliques et les monomères oléfiniques bicycliques présentant une double liaison C-C endocyclique et
b) au moins un monomère oléfinique polycyclique présentant au moins deux doubles liaisons C-C ;

et le rapport molaire des monomères oléfiniques a) aux monomères oléfiniques polycycliques b) vaut 80:20 à 15:85.

2. Revêtement formant une barrière selon la revendication précédente, **caractérisé en ce que** les monomères oléfiniques a) présentent une tension de cycle d'au moins 2 kcal/mole et **en ce que** les monomères oléfiniques polycycliques b) sont choisis parmi les diènes bicycliques présentant une tension de cycle d'au moins 15 kcal/mole.

3. Revêtement formant une barrière selon l'une quelconque des revendications précédentes, **caractérisé en ce que** le copolymère peut être préparé par polymérisation par métathèse à ouverture de cycle de cis-cyclooctène et de dicyclopentadiène.

4. Revêtement formant une barrière selon l'une quelconque des revendications précédentes, **caractérisé en ce que** le substrat support est une feuille de polymère qui est préparée à partir de poly(téréphtalate d'éthylène), de polypropylène orienté, de polyéthylène orienté ou de copolyesters aliphatiques-aromatiques biodégradables.

5. Revêtement formant une barrière selon l'une quelconque des revendications précédentes, **caractérisé en ce que** le substrat support est un emballage ou une partie d'un emballage.

6.  Revêtement formant une barrière selon l'une quelconque des revendications précédentes, **caractérisé en ce que** le substrat support contient un plastifiant.

7.  Revêtement formant une barrière selon la revendication précédente, **caractérisé en ce qu'**il s'agit, pour le substrat support, d'une feuille en PVC contenant un plastifiant.

8.  Revêtement formant une barrière selon l'une quelconque des revendications précédentes, **caractérisé en ce que** le revêtement formant une barrière est en plus revêtu directement ou indirectement par une couche d'adhésif.

9.  Procédé pour générer ou renforcer un effet de barrière sur un substrat support, choisi parmi les feuilles de polymère, le papier et le carton-pâte, au moins un copolymère étant appliqué en une épaisseur de couche d'au moins 1 $\mu$m sur le substrat support et le copolymère pouvant être préparé par polymérisation par métathèse à ouverture de cycle de

    a) au moins un monomère oléfinique, choisi dans le groupe constitué par les monomères oléfiniques monocycliques présentant une ou deux doubles liaisons C-C endocycliques et les monomères oléfiniques bicycliques présentant une double liaison C-C endocyclique et
    b) au moins un monomère oléfinique polycyclique présentant au moins deux doubles liaisons C-C ;

    et le rapport molaire des monomères oléfiniques a) aux monomères oléfiniques polycycliques b) valant 80:20 à 15:85.

10. Procédé selon la revendication précédente, **caractérisé en ce que** le copolymère est appliqué sous forme d'une dispersion aqueuse du copolymère et un film est formé sur le substrat support par séchage de la dispersion.

11. Procédé selon l'une quelconque des deux revendications précédentes, **caractérisé en ce que** le substrat support est une feuille ou un emballage et au moins une partie de la surface de l'emballage ou de la feuille est revêtue par un film du copolymère.

12. Utilisation d'un copolymère pour générer ou renforcer, sur un substrat support, choisi parmi les feuilles de polymère, le papier et le carton-pâte, un effet de barrière, le copolymère pouvant être préparé par polymérisation par métathèse à ouverture de cycle de

    a) au moins un monomère oléfinique, choisi dans le groupe constitué par les monomères oléfiniques monocycliques présentant une ou deux doubles liaisons C-C endocycliques et les monomères oléfiniques bicycliques présentant une double liaison C-C endocyclique et
    b) au moins un monomère oléfinique polycyclique présentant au moins deux doubles liaisons C-C ;

    et le rapport molaire des monomères oléfiniques a) aux monomères oléfiniques polycycliques b) valant 80:20 à 15:85.

13. Utilisation selon la revendication précédente, **caractérisée en ce que** le copolymère est utilisé sous forme d'une dispersion aqueuse du copolymère pour la préparation d'un film formant une barrière.

14. Utilisation selon l'une quelconque des deux revendications précédentes, **caractérisée en ce qu'**il s'agit, pour l'effet de barrière d'une barrière contre les graisses, contre l'oxygène, contre la vapeur d'eau, contre les plastifiants, contre les parfums ou contre le $CO_2$.

15. Utilisation selon l'une quelconque des revendications d'utilisation précédentes, **caractérisée en ce qu'**une barrière contre l'oxygène ou contre la vapeur est conférée à des feuilles de polymère ou une barrière contre les graisses est conférée à un papier.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1847558 A1
- US 61257063 B
- EP 1914265 A1
- US 2008234451 A
- EP 0824125 A
- DE 19859191
- WO 9320111 A
- WO 9604289 A
- WO 9703096 A
- WO 9706185 A

**In der Beschreibung aufgeführte Nicht-Patentliteratur**

- Handbook of Metathesis. Wiley-VCH, 2003
- *J. Am. Soc.,* 1996, 784-790
- *Coordination Chemistry Reviews,* 2007, vol. 251, 726-764